# EUROPEAN PATENT APPLICATION

(11) **EP 2 123 978 A1**
(43) Date of publication of application: **25.11.2009**
(21) Application number: 08305194.6
(22) Date of filing: 23.05.2008
(51) Int. Cl.: F23C 10/00, C01B 3/34

(54) **Process for using a facility for combusting carbonaceous materials and relating facility**

(71) Applicant: Alstom Technology Ltd, 5400 Baden (CH)
(72) Inventor: Maghdissian, Laurent, 94230 Cachan (FR); Semedard, Jean-Claude, 75014 Paris (FR); Piton, Antony, 75005 Paris (FR); Beal, Corinne, 78960 Voisins Le Bretonneux (FR)
(74) Representative: Gauer, Pierre

(57) **Abstract**

The invention concerns a process for using a facility in which circulates at least one oxide which is reduced and then oxidized in each of both reactors (1, 4) interconnected and including a first reactor (1) for reducing oxide by means of a media of fluidization and in which enter a fuel material (E1) and oxide material containing at least oxide (E2) and a second reactor (4) for oxidizing oxide.

According to the invention, additional oxygen (O) in a gaseous form is injecting into the said first reactor (1) for reducing oxide and said material quantity entering into the said first reactor (1) for reducing oxide is controlled, in order to obtain a reaction of conversion of the fuel material in thermal equilibrium.

## Description

The invention relates to a process for using a facility for burning carbonaceous materials and relating facility, in order to produce electricity and/or steam. The carbonaceous materials can be fossil fuels such as coal, for example, waste or biomass, and they are injected into a combustion chamber, for example a fluidized bed combustion chamber.

Such a facility for burning carbonaceous materials is described in patent document FR 2 850 156. This facility includes a reactor for reducing oxides, a first cyclone, a reactor for oxidizing oxides, a second cyclone, exchangers for controlling temperature of the circulating oxides and exchangers for flue gas heat recovery. In the facility circulate oxides which are reduced and then oxidized in the two reactors. According to this prior art, the solid fuel material is grounded before entering the oxide reduction reactor, and in the case of coal the average particle diameter is less than 500 µm. The oxides are reduced by having them in contact with the fuel which reacts with the oxygen released by the oxides and then oxidized by contact with air which regenerates the oxides.
The oxides have a particle size range from 50 to 500 µm and a density from 2000 to 7000 kg/m³.

This type of facility for combustion of carbonaceous solid materials assures, because of the simplicity and the compactness of this system, costs of capturing carbon dioxide reduced while providing production of steam for generating electricity.

The solid particles at the outlet of the first cyclone associated with the reduction reactor, consisting of oxides particles and of carbonaceous residues, pass through a seal pot and are then directed towards a device for removing the carbonaceous residues. This removal device is fluidized by steam. With this fluidization, the fine and light particles such as the carbonaceous residues may be separated and re-introduced into the reduction reactor, while the denser and larger oxide particles are transferred towards the oxidation reactor.

This removal device is a separator forming a carbon barrier in the facility, essential for capturing carbon dioxide which is a greenhouse gas which should be subject to emission restrictions.

More generally, such facilities, said chemical loopings, rely on providing oxygen in solid form by oxides which are oxygen carrier, in order to convert a fuel which can be a gas or a solid fuel. They can be used for combustion with solid, gaseous or liquid fuels or for gasification for production of hydrogen or synthetic gas.

In case of combustion, the reaction of conversion of the fuel can be endothermic.

The chemical reaction is 2 MeO + C → 2Me + CO₂

MeO being oxide, for example metal oxide.

In order to avoid the stop of the reaction, the temperature of the reactor must be maintained at a certain level.

The current way to control the temperature is to introduce in the reactor for oxides reduction solids coming from the reactor for oxides oxidation which is operating at a higher temperature or to add some inert solids mixed within the oxygen carrier if the quantity of oxides which can be injected is limited, as in gasification case, and thus provide the required heat.

The technical problem of these two solutions is that the solid flow is such high that it increases by the way the size of the facility.

The object of the invention is to improve such facility in order that the temperature is controlled without necessity of facility with great size.

To do this, the invention relates to a process for using a facility in which circulates at least one oxide which is reduced and then oxidized in each of both reactors interconnected and including a first reactor for reducing oxide by means of a media of fluidization and in which enter a fuel material and oxide material containing at least oxide and a second reactor for oxidizing oxide, process **characterized in that** additional oxygen in a gaseous form is injecting into the said first reactor for reducing oxide and said material quantity entering into the said first reactor for reducing oxide is controlled, in order to obtain a reaction of conversion of the fuel material in thermal equilibrium.

By means of the invention, the required solid flow is reduced thanks that part of the carbonaceous material is oxidized by gaseous oxygen in an exothermic reaction. It leads to a smaller reactor.

The invention assures an increasing of the residence time of fuel inside the reactor and thus a better carbon conversion rate.

According to a preferred embodiment, the said additional oxygen quantity is controlled, in order to control the temperature of the said first reactor for reducing oxide.

A short term response back up can be made by additional oxygen providing quickly heat to recover the required temperature.

According to a first embodiment, the said reaction of conversion is combustion.

In this case, the said additional oxygen quantity is preferably comprised between about 10 and 30% relatively to the stoechiometric oxygen need for complete fuel conversion. According to a second embodiment, the said reaction of conversion is gasification.

In this case, the said additional oxygen quantity is preferably comprised between about 30 and 50% relatively to the oxygen necessary for partial oxidation. Said oxide material can contain oxide and inert products.

Preferably, said additional oxygen is mixed with the media of fluidization, before entering into the said first reactor for reducing oxide.

Fuel material can be coal.

Said oxide can be metal oxide.

Said media of fluidization can be steam and eventually recycled flue gas.

The invention concerns a facility for implementing the process as here above **characterized in that** the said additional oxygen is introduced into a wind box of the said first reactor for reducing oxide.

The invention is described hereafter in more details with figure which only illustrates preferred embodiment of the invention.

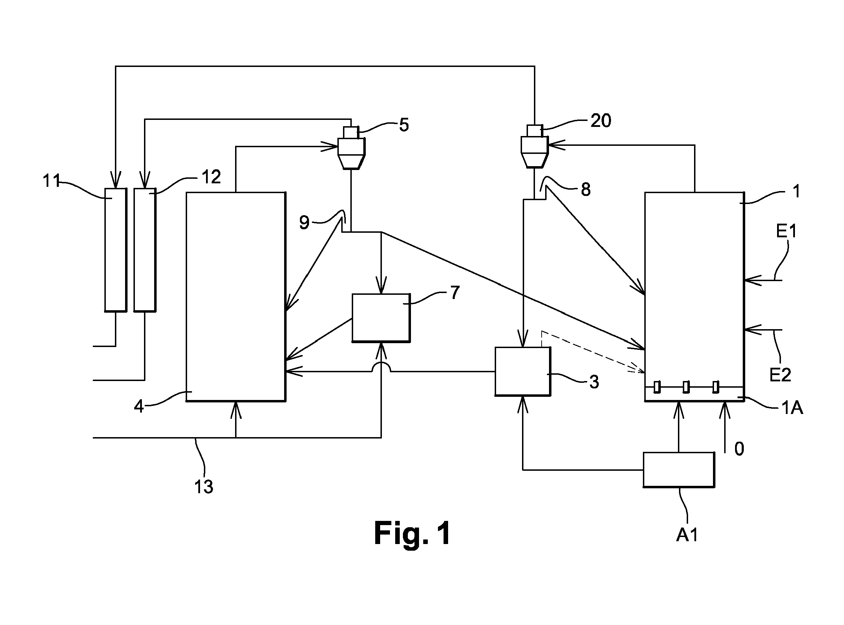

The figure 1 is a schematic view of a facility according to the invention.

As shown on figure 1, a facility for combusting carbonaceous solid materials, in order to produce electricity and/or steam, according to the invention, in which circulates at least one oxide, preferably a mixture of oxides, advantageously metal oxides, which is reduced and then oxidized, includes a first reactor 1 for reducing oxides in which enter a fuel material E1, for example grounded coal, and oxides E2 , a first separation cyclone 20 feeding with entrained solids from this reactor for reducing oxides, a carbon separator 3 installed at the outlet of this first cyclone in order to send the carbonaceous particles into the reactor for reducing oxides 1 and the oxides into a second reactor 4 for oxidizing oxides fluidized by air 13 and a second separation cyclone 5 feeding with entrained solids from the reactor for oxidizing oxides. The facility comprises two back pass 11, 12, containing recovery exchangers for the flue gases and for the air, each dedicated to one of the reactors. The reactor 1 for reducing oxides is fluidized by a mixture A1 of steam and recycled flue gas.

The separation of the carbonaceous residues from the metal oxides is obtained conventionally by the arrangement of cyclone 20, seal pot 8 and finally solid separator 3.

The solid oxides particles extracted from the bottom of the second cyclone 5 enter a seal pot 9 from which a first portion is transferred to the bottom of the second reactor 4 for oxidizing oxides, a second portion is recirculated to the bottom of the first reactor 1 for reducing oxides and a third portion is sent to an external bed 7 fluidized by air where heat exchangers are implemented, and finally fed to the second reactor 4 for oxidizing oxides.

This facility is of the type of the known facility described in patent document FR 2 850 156.

According to the invention, additional oxygen O in a gaseous form is injecting into the first reactor 1 for reducing oxide and the material E2 quantity entering into the first reactor 1 for reducing oxide is controlled, in order to obtain a reaction of conversion of the fuel material in thermal equilibrium.

This additional oxygen quantity is controlled, in order to control the temperature of the said first reactor for reducing oxide.

According to a first embodiment, the reaction of conversion is combustion, as described here above.

In this case, the material E2 is constituted mainly by oxides, preferably metal oxides. The additional oxygen O quantity is preferably comprised between about 10 and 30% relatively to the total stoichiometric oxygen needed for fuel conversion. This value depends of the used oxides and their enthalpy of reaction, transport capacity and heat capacity.

For example, if ilmeite FeTiO₃ is used, it has been calculated that the additional oxygen O quantity is equal to about 10% relatively to stoechiometric oxygen.

The chemical reaction 2 MeO + C → 2Me + CO₂ is endothermic and needs a providing of heat. Instead of providing the total amount of oxygen by the oxides and consequently using a great quantity of oxides and a reactor with a great size, the heat quantity is obtained by means of additional oxygen O by chemical reaction C + O₂ → CO₂ which is exothermic.

The flow of oxides can be divided by 1,5 to 2, by means of the invention.

The oxide material can contain inert products for supporting oxides.

According to a second embodiment, the said reaction of conversion is gasification.

In this case, the additional oxygen quantity is preferably about 30 to 50% to oxygen necessary for partial oxidation. Oxide material contains oxide and inert products.

In this case, the chemical reaction is Mea + C → Me + CO is endothermic and needs a providing of heat. Instead of providing the total amount of oxygen by the oxides and the inert products and consequently using a great quantity of oxides and of the inert products and a reactor with a great size, the heat quantity is obtained by means of additional oxygen O by chemical reaction said partial oxidation C + ½ O₂ → CO which is exothermic.

The required air separation unit for production of oxygen can be 20% of the size in comparison with a conventional air separation unit in a reactor functioning with only oxygen in a gaseous form. It depends of the rate of additional oxygen injected in a gaseous form. The energy penalty due to the air separation unit is decreased by 5.

Additional oxygen O is mixed with the media of fluidization, which is a mixture A1 of steam and recycled flue gas, before entering into the first reactor 1 for reducing oxide. Additional oxygen is introduced into a wind box 1A of the first reactor 1 for reducing oxide.

The oxygen O can be provided with a dedicated oxygen production or by a mixture containing oxygen in gaseous form.

## Claims

1. Process for using a facility in which circulates at least one oxide which is reduced and then oxidized in each of both reactors (1, 4) interconnected and including a first reactor (1) for reducing oxide by means of a media of fluidization and in which enter a fuel material (E1) and oxide material containing at least oxide (E2) and a second reactor (4) for oxidizing oxide, process **characterized in that** additional oxygen (O) in a gaseous form is injecting into the said first reactor (1) for reducing oxide and said material quantity entering into the said first reactor (1) for reducing oxide is controlled, in order to obtain a reaction of conversion of the fuel material in thermal equilibrium.

2. Process according to the preceding claim, **characterized in that** the said additional oxygen (O) quantity is controlled, in order to control the temperature of the said first reactor (1) for reducing oxide.

3. Process according to any of preceding claims, **characterized in that** the said reaction of conversion is combustion.

4. Process according to the preceding claim, **characterized in that** the said additional oxygen (O) quantity is comprised between about 10 and 30% relatively to stoechiometric oxygen for full fuel conversion.

5. Process according to the claim 1 or 2, **characterized in that** the said reaction of conversion is gasification.

6. Process according to the preceding claim, **characterized in that** the said additional oxygen (O) quantity is about 30 to 50% relatively to oxygen necessary for partial oxidation.

7. Process according to any of preceding claims, **characterized in that** said oxide material contains oxide and inert products.

8. Process according to any of preceding claims, **characterized in that** the additional oxygen (O) is mixed with the media of fluidization, before entering into the said first reactor f(1) or reducing oxide.

9. Process according to any of preceding claims, **characterized in that** fuel material (E1) is coal.

10. Process according to any of preceding claims, **characterized in that** said oxide is metal oxide.

11. Process according to any of preceding claims, **characterized in that** said media of fluidization (A1) is steam and eventually recycled flue gas.

12. Facility for implementing the process according to any of preceding claims, **characterized in that** the said additional oxygen (O) is introduced into a wind box (1A) of the said first reactor (1) for reducing oxide.

## Amended claims

### Amended claims in accordance with Rule 137(2) EPC.

**1.** Process for using a facility comprising a first reactor (1) for reducing oxide in which enter a fuel material (E1) and metal oxide for providing a reaction of combustion of the fuel material (E1), the first reactor (1) being connected to a second reactor (4) for oxidizing oxide, process **characterized in that** additional oxygen (0) in a gaseous form is injected into the said first reactor (1) for reducing oxide and **in that** the additional oxygen (0) quantity is comprised between 10 and 30% relatively to stoichiometric oxygen for full fuel material (E1) combustion.

**2.** Process according to claim 1, **characterized in that** the additional oxygen (0) is mixed with a media of fluidization (A1) before entering the said first reactor (1) for reducing oxide.

**3.** Process according to any of preceding claims, **characterized in that** fuel material (E1) is coal.

**4.** Process according to claim 2 or 3, **characterized in that** said media of fluidization (A1) is steam and recycled flue gas.
